# EUROPEAN PATENT APPLICATION

(11) **EP 2 803 713 A1**
(43) Date of publication of application: **19.11.2014**
(21) Application number: 13735789.3
(22) Date of filing: 07.01.2013
(51) Int. Cl.: C09K 3/10, B32B 27/00, B65D 65/40, C08L 45/00, C08L 65/00

(54) **RESIN COMPOSITION FOR SEALANTS, LAMINATED FILM, AND PACKAGING BAG**

(30) Priority: 11.01.2012 JP 2012003221
(71) Applicant: Fujimori Kogyo Co., Ltd, Shinjuku-ku, Tokyo 160-0023 (JP)
(72) Inventor: OKAMOTO Hajime, Tokyo 160-0023 (JP); KASHIMA Kousuke, Tokyo 160-0023 (JP); INADA Masakazu, Tokyo 160-0023 (JP); YOSHIDA Mihoko, Tokyo 160-0023 (JP)
(74) Representative: Kling, Simone
(86) International application number: PCT/JP2013/050019
(87) International publication number: WO 2013/105524

(57) **Abstract**

The object of the present invention is to provide a resin composition for a sealant which has improved heat-sealing properties and non-absorbing properties to an inorganic component contained in the content, a laminated film, and a packaging bag, and the present invention provides a resin composition for a sealant including a cycloolefin polymer and a cycloolefin copolymer, wherein the resin composition includes 10 to 95% by weight of the cycloolefin polymer and 5 to 90% by weight of the cycloolefin copolymer.

## Description

### TECHNICAL FIELD

The present invention relates to a sealant resin composition which has excellent low-molecular organic compound non-absorbing and barrier properties and is capable of being stably heat-sealed, a laminated film, and a packaging bag.

Priority is claimed on Japanese Patent Application No. 2012-003221, filed January 11, 2012, the content of which is incorporated herein by reference.

### BACKGROUND ART

A conventional packaging film includes a sealant containing a polyolefin resin had inferior non-absorbing properties and barrier properties to a low-molecular organic compound. Such a conventional packaging film had a problem in which the flavor of a food, a drink, a cosmetic, etc. is absorbed, and the flavor of the content changes; or a problem in which a very small amount of an active ingredient of a cosmetic, a medicine, etc. penetrates into or is absorbed, and effects of the cosmetics, medicines, etc. may decrease. The packaging film may also be affected. Specifically, an adhesive layer, anchoring agent layer, printing layer, or other layer in the laminated film may be adversely affected by being penetrated by an organic component, such as a flavor component, alcohol, and surfactant contained in the package contents, thereby decreasing the lamination strength between it and the layers above, and possibly causing delamination (peeling).

Patent Document 1 discloses a resin composition which is obtained by blending a cycloolefin copolymer (COC) in a specific ethylene-α-olefin copolymer.

Patent Document 2 discloses a cycloolefin resin composition for melt extrusion which is obtained by blending a cycloolefin resin (A) having a low glass transition point and a cycloolefin resin (B) having a high glass transition point in a specific blending ratio range.

### PRIOR ART DOCUMENT

### PATENT DOCUMENT

| | |
|---|---|
| Patent Document 1 | Japanese Unexamined Patent Application, First Publication No. 2007-291364 |
| Patent Document 2 | Japanese Unexamined Patent Application, First Publication No. 2010-31253 |

### DISCLOSURE OF THE INVENTION

### PROBLEMS TO BE SOLVED

In the case of Patent Document 1, the resin composition disclosed has a problem in which since the ethylene-α-olefin copolymer is a base resin (main resin) of the resin composition, the organic component contained in the content is easily absorbed when a packaging bag is made using a packaging film containing the resin composition.

In the case of Patent Document 2, the cycloolefin resin composition used in the Example is obtained by blending cycloolefin copolymers (COC) which are marketed by © TOPAS Advanced Polymer, and has a problem in which the organic components in the contents in a packaging bag manufactured using a packaging film containing the cycloolefin resin composition are easily absorbed by the sealant in seal the packaging bag.

In consideration of the above described problems of the conventional technology, an object of the present invention is to provide a resin composition for a sealant which can improve non-absorbing properties and barrier properties to a low-molecular organic compound, and heat-sealing properties, a laminated film, and a packaging bag.

### MEANS FOR SOLVING THE PROBLEM

In order to solve the problems, the present invention provides a resin composition for a sealant including a cycloolefin polymer (it may be abbreviated as COP below) and a cycloolefin copolymer (it may be abbreviated as COC below), wherein the resin composition includes 10 to 95% by weight of the cycloolefin polymer and 5 to 90% by weight of the cycloolefin copolymer.

It is preferable that the COP be a polymer of cycloolefin having a norbornene skeleton, or a hydrogenated product thereof.

It is preferable that the COC be a copolymer of cycloolefin having a norbornene skeleton and non-cycloolefin, or a hydrogenated product thereof.

In addition, the present invention provides a laminated film including a plurality of layers including a base, and a sealant layer which is one outermost layer of the laminated film, wherein the sealant layer includes the resin composition for a sealant.

Furthermore, the present invention provides a packaging bag which is made of the laminated film, and includes a heat sealed part obtained by heat sealing the sealant layer.

### EFFECTS OF THE PRESENT INVENTION

According to the present invention, it is possible to provide a resin composition for a sealant which improves both the non-absorbing properties to an organic component contained in a content and the heat sealing properties, a laminated film, and a packaging bag.

### EMBODIMENTS OF THE PRESENT INVENTION

Below, the present invention will be explained referring preferred embodiments of the present invention.

The resin composition for a sealant in this embodiment includes 10 to 95% by weight of a cycloolefin polymer (COP), and 5 to 90% by weight of a cycloolefin copolymer (COC).

In addition, a laminated film in this embodiment includes a base, a sealant layer, and if necessary, an intermediate layer. In other words, the laminated film includes a plurality of layers including a sealant layer and a base which are the outermost layer of the laminated film, and if necessary, an intermediate layer, an adhesive layer, or an anchoring agent layer.

In the present invention, the sealant layer is a layer used to heat-seal. When the sealant layer is used in a packaging material, the sealant layer is arranged as an innermost layer which is in contact with the package content. The sealant layer is formed by the resin composition for a sealant in the present invention.

The sealant layer may be laminated on the base or the intermediate layer through the adhesive layer or the anchoring agent layer. The sealant layer may also be directly laminated on the base. Examples of the intermediate layer include a reinforcing layer, a gas barrier layer, a shielding layer, and a printing layer. The layer may be used alone or in combination of two or more.

The cycloolefin polymer used in the sealant resin composition of the present invention is, for example, a cycloolefin homopolymer, a cycloolefin copolymer containing two or more monomers, or a hydrogenated product thereof. The cycloolefin polymer is generally called COP. The COP is preferably an amorphous polymer, and is more preferably a ring-opened polymer of the cycloolefin by metathesis or a hydrogenated product thereof. The COP has a higher ratio of alicyclic structure than the COC or the like, and therefore, the COP has excellent non-absorbing properties, which is preferable.

For example, the COP has the structure shown in the chemical formula (1) below. 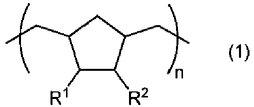 (in the chemical formula (1), R¹ and R² are the same or different organic groups having 1 to 20 carbon atoms or a hydrogen atom. R¹ and R² may make a ring together. n is an integer of one or more.)

The cycloolefin copolymer used in the resin composition for a sealant in the present invention is, for example, a copolymer of one or more of cycloolefin and one or more of non-cycloolefin, or a hydrogenated product thereof. The cycloolefin is generally called COC. The COC is preferably an amorphous copolymer, and is more preferably a copolymer of cycloolefin and ethylene, or a hydrogenated product thereof.

For example, the COC has a structure shown in the chemical formula (2) below. 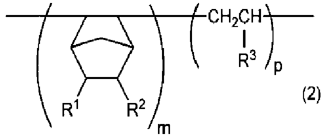 (in the chemical formula (2), R¹ and R² are the same or different organic groups having 1 to 20 carbon atoms, or a hydrogen atom, and R¹ and R² may make a ring together. R³ is an organic group having 1 to 20 carbon atoms, or a hydrogen atom. m and p are independently an integer of one or more.)

Examples of the organic group having 1 to 20 carbon atoms include an alkyl group, such as methyl, ethyl, n-propyl, i-propyl, n-butyl, i-butyl, sec-butyl, t-butyl, i-pentyl, t-pentyl, n-hexyl, n-heptyl, n-octyl, t-octyl (1,1-dimethyl-3,3-dimethylbutyl), 2-ethylhexyl, nonyl, decyl, undecyl, dodecyl, tridecyl, tetradecyl, pentadecyl, hexadecyl, heptadecyl, octadecyl, nonadecyl, and icosyl; a cycloalkyl group, such as cyclopentyl, cyclohexyl, cycloheptyl, and cyclooctyl; an alkyl cycloalkyl group, such as 1-methylcyclopentyl, 1-methylcyclohexyl, and 1-methyl-4-i-propylcyclohexyl; an alkenyl group, such as allyl, propenyl, butenyl, 2-butenyl, hexenyl, and cyclohexenyl; an aryl group, such as phenyl, naphthyl, methylphenyl, methoxyphenyl, biphenyl, phenoxyphenyl, chlorophenyl, and sulfenyl; and an aralkyl group, such as benzyl, 2-phenylethyl (phenethyl), α-methylbenzyl, and α,α-dimethylbenzyl. However, the organic group having 1 to 20 carbon atoms is not limited to these groups. In addition, the organic group may be used alone or in combination of two or more.

As the cycloolefin which is used as a monomer for the COP and COC, vinyl cycloalkane including cycloalkane having 3 to 20 carbon atoms, monocycloalkane having 3 to 20 carbon atoms, cycloolefin having a norbornene skeleton (norbornene type monomer), or a derivative thereof is preferable.

Examples of the norbornene type monomer include bicyclo[2.2.1]-2-heptene (norbornene), tricyclo[4.3.0.1^{2,5}]-3-decene, tetracyclo[4.4.0.1^{2,5}.1^{7,10}]-3-dodecene, pentacyclo[6.5.1.1^{3,6}.0^{2,7}.0^{9,13}]-4-pentadecene, pentacyclo[7.4.0.1^{2,5}.1^{9,12}.0^{8,13}]-3-pentadecene, pentacyclo[8.4.0.1^{2,5}.1^{9,12}.0^{8,13}]-3-hexadecene, pentacyclo[6.6.1.1^{3,6}.0^{2,7}.0^{9,14}]-4-hexadecene, hexacyclo[6.6.1.1^{3,6}.1^{10,13}.0^{2,7}.0^{9,14}]-4-heptadecene, heptacyclo[8.7.0.1^{2,9}.1^{4,7}.1^{11,17}.0^{3,8}.0^{12,16}]-5-eicosene, heptacyclo[8.7.0.1^{3,6}.1^{10,17}.1^{12,15}.0^{2,7}.0^{11,16}]-4-eicosene, heptacyclo[8.8.0.1^{2,9}.1^{4,7}.1^{11,18}.0^{3,8}.0^{12,17}]-5-henicosene, octacyclo[8.8.0.1^{2,9}.1^{4,7}.1^{11,18}.1^{13,16}0^{3,8}.0^{12,17}]-5-docosene, nonacyclo[10.9.1.1^{4,7}.1^{13,20},1^{15,18}.0^{2,10}.0^{3,8}.0^{12,21}.0^{14,19}]-5-pentacosene, which are shown in the chemical formula (3) below, and the derivatives thereof. Examples of the derivative include a compound having one or more organic groups (R¹, R²) having 1 to 20 carbon atoms as a substituted group, and a compound having two or more unsaturated bonds, such as norbornadiene.

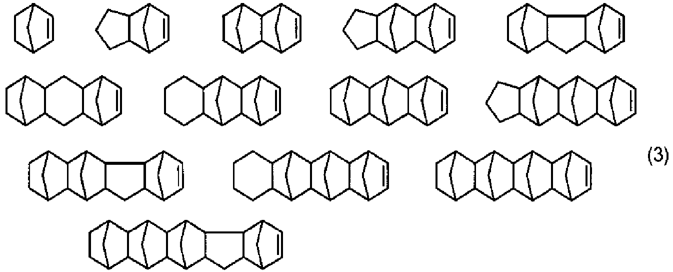

Examples of the non-cycloolefin used as a monomer for the COC include α-olefin, such as ethylene, propylene, 1-butene, 1-pentene, 1-hexene, 1-heptene, and 1-octene, 3-decene, and 3-dodecene.

The COP is preferably a polymer of cycloolefin having a norbornene skeleton, or the hydrogenated product thereof. The COC is preferably a copolymer of cycloolefin having a norbornene skeleton and non-cycloolefin, or a hydrogenated product thereof.

As the COP, marketed products can be used. Preferable examples of a manufactured product of the COP include ZEONEX ® and ZEONOR ®, which are manufactured by Zeon Corporation. As the COC, manufactured products can also be used. Preferable example of the manufactured product of the COC include APEL ® which is manufactured by Mitsui Chemicals, Inc. and TOPAS ® which is manufactured by Polyplastics Co., Ltd.

The sealant layer in the laminated film of the present invention is formed by using the resin composition for a sealant. The resin composition can suitably include additives as long as the object of the present invention can be achieved. Examples of the additives include an antioxidant, lubricant, antiblocking agent, flame retardant, ultraviolet absorber, light stabilizer, antistatic agent, and pigment.

The glass transition point (Tg) of the resin composition for a sealant is preferably 40°C or more. When the glass transition point is less than 40°C, the non-absorbing properties of obtained sealant layer decreases. In addition, it is preferable that the Tg of the COP and COC before blending be in a range of 50 to 140°C.

In the present invention, the blending ratio between the COP and the COC is in a range of 10 to 95% by weight and 5 to 90% by weight when the total amount of the COP and the COC is assumed to 100% by weight. Due to the blending ratio, a sealant material having both excellent sealing strength and non-absorbing properties, compared to the COP having excellent non-absorbing properties but low sealing strength, and the COC having excellent sealing strength but low non-absorbing properties. In addition, it is confirmed that surprising effects are obtained in which elongation is remarkably improved by blending the COP and the COC in the range, compared to individual COP or COC. Moreover, the film easily extends and is made more flexible as the elongation increases.

The base of the laminated film is preferably a stretch film which is excellent in mechanical properties, such as heat-resisting properties, and strength, and printability. Examples of the stretch film include a biaxially stretched polyethylene terephthalate (O-PET) film, a biaxially stretched nylon (O-Ny) film, and a biaxially stretched polypropylene (OPP) film. The thickness of the base is generally in a range of 10 to 50 µm, and is preferably in a range of 10 to 30 µm.

It is preferable that an anchoring agent layer or an adhesive layer be arranged on the surface of the sealant layer where faces toward the base in order to adhere the sealant layer to the base or another film. When the sealant layer is formed by an extrusion lamination method, an anchoring agent layer is formed on the surface of the sealant layer where faces toward the base. When an O-PET film is used as the base, the anchoring agent layer may not be formed. When the sealant layer, which is formed as a monolayer in advance, is adhered to the base or another film by the dry lamination method, an adhesive layer is formed on the surface of the sealant layer where faces toward the base. In addition, when the coextruding method is used, an adhesive resin, such as acid modified polyolefin resin may be used. As the anchoring agent for the anchoring agent layer, an anchoring agent, which is generally used in the extrusion lamination method, such as a polyurethane-based anchoring agent, polyester-based anchoring agent, and alkyl titanate (organic titanate compound) may be used. The anchoring agent may be selected in accordance with the application of the laminated film.

Examples of the adhesive agent for the adhesive layer include an adhesive agent, which is generally used in the dry lamination method, such as a polyurethane-based adhesive agent, and polyether-based adhesive agent. The adhesive agent may be selected in accordance with the application of the laminated film.

A gas barrier layer or a reinforcing layer may be included as an intermediate layer between the base and the anchoring agent layer or the adhesive layer which is laminated on the sealant layer so as to face toward the base. The reinforcing layer compliments the strength properties of the laminated film. Examples of the resin constituting the reinforcing layer include a polyolefin resin, such as polypropylene (PP), and polyethylene (PE), biaxially stretched polyethylene terephthalate (O-PET), biaxially stretched nylon (O-Ny), and biaxially stretched polypropylene (OPP). The thickness of the reinforcing layer is generally in a range of 5 to 50 µm, and preferably in a range of 10 to 30 µm.

The gas barrier layer provides gas barrier properties to the laminated film, which interrupts the permeation of gas, such as oxygen, and water vapor, through the laminated film. Examples of the gas barrier layer include a metal foil, an evaporation layer including aluminum or inorganic oxide, and a gas barrier resin layer made of ethylene-vinyl alcohol copolymer (EVOH), or vinylidene chloride. Moreover, the gas barrier layer may be used as the reinforcing layer. The gas barrier layer may be laminated on one surface of the base or reinforcing layer. In general, the gas barrier layer is formed as an intermediate layer between the base and the sealant layer. When the gas barrier layer is the evaporation layer including inorganic oxide, the gas barrier layer can be used as an outermost layer which is arranged outer side than the base (in other words, the outermost layer opposite to the sealant layer in the laminated film).

When the metal foil or the layer made of the gas barrier resin layer, the thickness thereof is generally in a range of 5 to 50 µm, and preferably in a range of 10 to 30 µm. When the evaporation layer including metal or inorganic oxide is used as the gas barrier layer, the thickness thereof can be decreased than the thickness of the metal foil or the gas barrier resin layer.

The method for producing the laminated film according to the present invention is not particularly limited. The extrusion lamination method, dry lamination method, coextruding method can be used alone or in combination of two or more to form the layers constituting the laminated film.

In the laminated film of this embodiment, the thickness of the sealant layer varies depending on the application of the packaging material. The thickness of the sealant layer is not particularly limited. However, the thickness of the sealant layer is generally in a range of about 5 to about 150 µm, and preferably in a range of 15 to 80 µm.

The laminated film of this embodiment is excellent in both heat sealing properties and processing suitability. Therefore, the laminated film of this embodiment is suitably used in a bag manufacturing using an ordinary bag making machine, or a form-fill-sealing machine.

The packaging bag of this embodiment can be produced by heat-sealing the sealant layer of the laminated film. The packaging bag of this embodiment has excellent non-absorbing properties and barrier properties to low-molecular components. Therefore, the packaging bag of this embodiment can be suitably used as a packaging bag for drinks and foods, cosmetics, medicines, etc. The shape of the packaging bag is not particularly limited. The packaging bag may be an inner bag for a bag-in-box or a film-bag liner for a drum, in addition to a pouch, such as a three-side-sealed packaging bag, four-side-sealed packaging bag, butt-seam packaging bag, gazette bag, and self-supporting bag. The packaging bag of this embodiment can be used in many applications without limitation.

When an outlet port is formed in the packaging bag in the present invention, any outlet ports can be used as long as the outlet port can be connected with the sealant layer of the laminated film constituting the packaging bag and maintain the sealing properties of the packaging bag. However, it is preferable to form the outlet port using a resin which can be heat-sealed with the sealant layer of the laminated film, and to heat-seal the outlet port and the laminated film. When the laminated film and the outlet port are heat-sealed, the outlet port may be inserted between the laminated films which are superimposed such that the sealant layers are arranged on the inside, and the sealant layers and the outlet port are heat-sealed. In addition, a flange portion or a fusion base portion having a boat-shape may be formed at one end of the outlet port, and the flange portion or the fusion base portion may be heat-sealed to the periphery of a hole formed in the laminated film or to the inside surface of a hole of the packaging bag.

### EXAMPLES

The present invention will be explained in detail with reference to Examples.

### (Sealant Film)

As shown in Tables 1 and 2, a resin composition for a sealant was prepared by blending 0 to 100% by weight of a COP and 0 to 100% by weight of a COC. Then the resin composition for a sealant was melted, and kneaded. Then, a sealant film having a predetermined thickness was formed by extrusion-molding the resin composition.

Moreover, the COP and the COC used are shown below.
- ┌COP┘: cycloolefin polymer (Zeon Corporation, trade name: ZEONOR® 1020R)
- ┌COC1┘: cycloolefin copolymer (Polyplastics, Co., Ltd., trade name: TOPAS® 8007F-04)
- ┌COC2┘: cycloolefin copolymer (Mitsui Chemicals, Inc., trade name: APEL® APL8008T)

### (Production of Laminated Film)

A laminated film having a structure of a PET film having a thickness of 12 µm/ an A1 foil having a thickness of 9 µm/ the sealant film having a thickness of 30 µm was produced.

### (Evaluation method)

A porch was produced using the laminated film, and evaluated as explained below. Moreover, the tensile properties (4) were evaluated using a test piece produced by cutting the sealant film.

### (1) Heat-Seal Strength

The seal strength (N/15 mm) of a heat-sealed portion of the porch was measured under the conditions in which the tension speed was 300 mm/min, and the width of the heat-sealed portion was 15 mm in accordance with JIS Z 0238. Moreover, the heat-sealed portion was produced by pressing the sealant film with 0.2 MPa and heating it for 1 second at any one of temperature of 140°C, 160°C, 180°C, 200°C, and 220°C.

### (2) Stability Range of Heat-Seal Strength

The temperature range, in which the heat-seal strength measured in the item (1) was 13 N/mm or more, and the seal strength in a range of -20°C to +20°C to each of the heat-sealing temperatures was in a range of the heat-seal strength ±1 N/15mm, was defined as stability range.

### (3) Residual Ratio of α-tocopherol acetate

2.5 ml of a commercially available skin lotion containing α-tocopherol acetate (vitamin E acetate) as an active ingredient was put in the porch, and an opening portion of the porch was adhered by heat-sealing under conditions in which the pressure was 0.2 MPa, the heat-sealing time was 1 second, and the temperature was 180°C. The heat-sealed porch was stored at 40°C for 1 month to 3 months. After opening the heat-sealed porch, the residual amount of α-tocopherol acetate in the skin lotion was measured by the high-performance liquid chromatography method. Then, the residual ratio of the active ingredient was calculated based on the residual amount.

### (4) Tensile Properties

The tensile strength (N/15 mm) and the elongation (%) of the sealant film were measured in accordance with "Plastics-Determination of tensile properties" in JIS K 7127. The width of the test piece of the sealant film was 15 mm. The tension speed was 300 mm/min. The distance between the clamping jaws for measuring the elongation was adjusted to 50 mm.

The evaluation results are shown in Tables 1 to 4. In the heat-seal strength of Tables 1 and 2, the heat-seal strength in the stability range of the heat-seal strength is underlined.

**[Table 1]**

| | Composition of Sealant film (% by weight) | | Heat-Seal Strength (N/15 mm) | | | | | Stability Range of Heat-Seal Strength |
|---|---|---|---|---|---|---|---|---|
| | COP | COC1 | 140°C | 160°C | 180°C | 200°C | 220°C | |
| Case 1 | 100 | 0 | 0.1 | 2.0 | 2.4 | 9.5 | 14.9 | none |
| Case 2 | 90 | 10 | 0.7 | 9.1 | 15.0 | 14.9 | 16.9 | 180°C to 200°C |
| Case 3 | 80 | 20 | 9.3 | 13.7 | 16.4 | 16.6 | 16.6 | 180°C to 220°C |
| Case 4 | 70 | 30 | 0.2 | 8.6 | 13.2 | 14.9 | 17.4 | none |
| Case 5 | 60 | 40 | 1.0 | 15.7 | 14.8 | 17.9 | 19.5 | 160°C to 180°C |
| Case 6 | 50 | 50 | 13.8 | 15.3 | 17.2 | 19.2 | 18.3 | 200°C to 220°C |
| Case 7 | 40 | 60 | 11.7 | 16.5 | 18.4 | 20.0 | 20.7 | 200°C to 220°C |
| Case 8 | 30 | 70 | 16.5 | 14.1 | 14.7 | 12.6 | 19.3 | 160°C to 180°C |
| Case 9 | 20 | 80 | 11.2 | 15.2 | 16.0 | 18.9 | 19.8 | 160°C to 180°C |
| | | | | | | | | 200°C to 220°C |
| Case 10 | 10 | 90 | 13.9 | 15.1 | 17.5 | 19.0 | 16.1 | none |
| Case 11 | 0 | 100 | 12.5 | 13.9 | 20.1 | 18.4 | 14.6 | none |

**[Table 2]**

| | Composition of Sealant film (% by weight) | | Heat-Seal Strength (N/15 mm) | | | | | Stability Range of Heat-Seal Strength |
|---|---|---|---|---|---|---|---|---|
| | COP | COC2 | 140°C | 160°C | 180°C | 200°C | 220°C | |
| Case 12 | 95 | 5 | 0.2 | 0.5 | 10.6 | 7.9 | 16.0 | none |
| Case 13 | 90 | 10 | 0.1 | 4.0 | 11.8 | 15.3 | 16.0 | 200°C to 200°C |
| Case 14 | 80 | 20 | 0.2 | 10.5 | 15.7 | 15.1 | 20.2 | 180°C to 220°C |
| Case 15 | 70 | 30 | 0.2 | 10.5 | 15.9 | 13.0 | 18.5 | none |
| Case 16 | 60 | 40 | 0.2 | 12.7 | 16.2 | 17.9 | 17.7 | 200°C to 220°C |
| Case 17 | 50 | 50 | 1.9 | 16.4 | 15.6 | 18.2 | 20.8 | 160°C to 180°C |
| Case 18 | 40 | 60 | 5.0 | 12.5 | 14.6 | 16.6 | 17.1 | 200°C to 220°C |
| Case 19 | 30 | 70 | 3.7 | 13.0 | 15.0 | 17.7 | 17.3 | 200°C to 220°C |
| Case 20 | 20 | 80 | 8.3 | 12.5 | 15.5 | 18.1 | 18.5 | 200°C to 220°C |
| Case 21 | 10 | 90 | 11.9 | 13.9 | 16.4 | 18.1 | 18.2 | 200°C to 220°C |
| Case 22 | 5 | 95 | 12.0 | 11.8 | 14.7 | 11.0 | 9.6 | none |
| Case 23 | 0 | 100 | 4.8 | 12.0 | 14.1 | 12.4 | 10.0 | none |

**[Table 3]**

| | Composition of Sealant film (% by weight) | | Residual Ratio of α-tocopherol acetate (%) | | Tensile Strength (N/15mm) | Elongation (%) |
|---|---|---|---|---|---|---|
| | COP | COC1 | 1 month | 3 months | | |
| Case 1 | 100 | 0 | 89.6 | 96.7 | 25.9 | 4.8 |
| Case 2 | 90 | 10 | 92.5 | 86.7 | 22.9 | 4.5 |
| Case 3 | 80 | 20 | 85.7 | 86.3 | 28.1 | 4.1 |
| Case 4 | 70 | 30 | 91.6 | 99.1 | 21.7 | 69.9 |
| Case 5 | 60 | 40 | 90.0 | 98.6 | 22.8 | 35.7 |
| Case 6 | 50 | 50 | 85.9 | 82.9 | 22.1 | 21.5 |
| Case 7 | 40 | 60 | 93.8 | 95.0 | 25.1 | 21.1 |
| Case 8 | 30 | 70 | 99.4 | 96.8 | 20.0 | 6.0 |
| Case 9 | 20 | 80 | 84.1 | 82.6 | 19.2 | 3.2 |
| Case 10 | 10 | 90 | 93.8 | 94.9 | 23.5 | 2.8 |
| Case 11 | 0 | 100 | 83.0 | 81.9 | 27.5 | 3.0 |

**[Table 4]**

| | Composition of Sealant film (% by weight) | | Residual Ratio of α-tocopherol acetate (%) | | Tensile Strength (N/15 mm) | Elongation (%) |
|---|---|---|---|---|---|---|
| | COP | COC2 | 1 month | 3 months | | |
| Case 12 | 95 | 5 | 100.0 | 94.7 | 23.1 | 19.9 |
| Case 13 | 90 | 10 | 101.8 | 93.8 | 22.8 | 50.5 |
| Case 13 | 80 | 20 | - | - | 21.5 | 63.8 |
| Case 15 | 70 | 30 | - | - | 22.5 | 22.1 |
| Case 16 | 60 | 40 | - | - | 26.1 | 26.2 |
| Case 17 | 50 | 50 | - | - | 24.6 | 51.7 |
| Case 18 | 40 | 60 | 90.1 | 91.2 | 24.3 | 73.5 |
| Case 19 | 30 | 70 | - | - | 22.9 | 47.5 |
| Case 20 | 20 | 80 | 89.0 | 78.5 | 22.9 | 106.5 |
| Case 21 | 10 | 90 | 88.5 | 75.8 | 20.6 | 94.6 |
| Case 22 | 5 | 95 | 82.3 | 73.0 | 18.2 | 5.3 |
| Case 23 | 0 | 100 | 80.2 | 72.5 | 20.6 | 9.8 |

As shown in Tables, when the blending ratio between the COP and the COC relative to 100% by weight of the resin composition (that is, the total weight of the COP and the COC is 100% by weight) was set to 10 to 95% by weight and 5 to 90% by weight (Cases 4 to 8 and Cases 12 to 21), the porch had excellent heat-seal strength and non-absorbing properties. In addition, the sealant film in Cases 4 to 8 and Cases 12 to 21 had a remarkably improved elongation, compared with the sealant film containing the only COP (Case 1) or COC (Cases 11 and 23).

When the porch included the sealant film containing the only COP (Case 1), the temperature, at which the sufficient heat-seal strength was obtained, was high temperatures, 200°C or more, and did not have the stability range of the heat-seal strength.

When the sealant film contained 80% by weight or more of the COC1 (Cases 9 to 11), the elongation was low which substantially equaled to the elongation of the sealant film containing the only COC1 (Case 11). In addition, the porch including the sealant film containing only the COC1 (Case 11) had excellent heat-seal strength at low temperatures, about 180°C, however, the heat-seal strength remarkably decreased at higher temperatures than about 180°C.

Furthermore, when the porch included the sealant film containing 95% by weight or more of the COC2 (Case 22), the porch had low heat-seal strength and the sealant film had a low elongation, which were substantially equal or lower than those of the porch and the sealant film containing only the COC2 (Case 23).

### [Industrial Applicability]

In particular, the present invention can be used in a packaging bag for contents including flavors or an active ingredient, such as a food, a drink, a cosmetic, and a medicine.

## Claims

1. A resin composition for a sealant including a cycloolefin polymer and a cycloolefin copolymer,
wherein the resin composition includes 10 to 95% by weight of the cycloolefin polymer and 5 to 90% by weight of the cycloolefin copolymer.

2. The resin composition for a sealant according to Claim 1,
wherein the cycloolefin polymer is a polymer of cycloolefin having a norbornene skeleton, or a hydrogenated product thereof; and
the cycloolefin copolymer is a copolymer of cycloolefin having a norbornene skeleton and non-cycloolefin, or a hydrogenated product thereof.

3. A laminated film including a plurality of layers including a base, and a sealant layer which is one outermost layer of the laminated film,
wherein the sealant layer includes the resin composition for a sealant according to Claim 1 or 2.

4. A packaging bag which is made of the laminated film according to Claim 3, and includes a heat sealed part obtained by heat sealing the sealant layer.
